# EUROPÄISCHE PATENTSCHRIFT

(11) **EP 2 073 573 B1**
(45) Veröffentlichungstag und Bekanntmachung des Hinweises auf die Patenterteilung: **20.04.2011**
(21) Anmeldenummer: 08168857.4
(22) Anmeldetag: 11.11.2008
(51) Int. Cl.: H04R 25/00, H02J 7/00

(54) **Energiespeichermittel-Haltevorrichtung mit abgedeckten Ladekontakten und Gehäusemodul**
Energy saving module holding device with covered charging contacts and casing module
Dispositif de fixation de moyens de stockage d'énergie doté de contacts de charge recouverts et d'un module de boîtier

(30) Priorität: 20.12.2007 DE 102007061591
(43) Veröffentlichungstag der Anmeldung: 24.06.2009
(73) Patentinhaber: Siemens Medical Instruments Pte. Ltd., Singapore 139959 (SG)
(72) Erfinder: Rass, Uwe, 90480 Nürnberg (DE); Sauer, Joseph, 96129 Strullendorf (DE); Schmidt, Benjamin, 90419 Nürnberg (DE); Schmitt, Christian, 91091 Grossenseebach (DE)
(74) Vertreter: Maier, Daniel Oliver

(56) Entgegenhaltungen:
- EP-A2- 0 681 412
- DE-A1- 4 309 116
- DE-A1- 19 601 231
- US-B1- 6 265 100
- US-B1- 6 356 053

## Beschreibung

Die Erfindung betrifft eine im Patentanspruch 1 angegebene Energiespeichermittel-Haltevorrichtung mit in einem Haltemodul angeordneten Kontaktmitteln sowie ein im Patentanspruch 8 angegebenes Gehäusemodul.

Hörgeräte benötigen für ihren Betrieb eine Energiequelle zur Versorgung der elektrischen Komponenten. In der Regel sind deshalb Hörgeräte mit Batterien als Energiespeichermittel ausgestattet. Um ein zeitaufwendiges und kostspieliges Wechseln der Batterien zu vermeiden, werden häufig wiederaufladbare Batterien, sogenannte Akkumulatoren, verwendet. Zum Aufladen der Akkumulatoren müssen diese entweder aus dem Hörgerät entfernt und an eine Batterieladestation angeschlossen werden, oder sie können im eingebauten Zustand induktiv oder galvanisch über Spulen oder Kontakte geladen werden.

Aus der Patentschrift DE 10 2005 080 977 A1 ist bekannt, dass zum Nachladen einer Batterie bei einem Hörgerät des sogenannten Berührungstyps an der Außenseite eines Hörgeräts eine Klemme erforderlich ist. Da die Klemme durch ein Anhaften von Wasser korrodieren kann, wird bevorzugt ein Nichtberührungstyp, also die induktive Nachladung, verwendet.

Nachteilig am induktiven Laden ist einerseits die erforderliche Spule im Hörgerät, welche insbesondere bei In-dem-Ohr Hörgeräten Platzprobleme bereitet, andererseits die beschränkte Leistungsübertragung, so dass ein vollständiger Nachladevorgang lange dauern kann.

Des Weiteren zeigt das Dokument US 6 356 053 eine Energiespeichermittel-Haltevorrichtung in einem Funktelefon, die Haltevorrichtung umfassend ein Halte-Element und mindestens ein in dem Halte-Element angeordnetes Kontaktmittel, wobei in der Energieladevorrichtung vorhandenseinde Kontaktelemente zur Aufladung des Energiespeichermittels von außen kontaktierbar aber durch menschliche Finger nicht erreichbar sind.

Es ist daher Aufgabe der Erfindung diese Nachteile zu überwinden und eine Vorrichtung anzugeben, welche einerseits ein schnelles Aufladen eines Energiespeichermittels, insbesondere einer Batterie, ermöglicht, andererseits eine Korrosion von frei liegenden Kontakten vermeidet.

Gemäß der Erfindung wird die gestellte Aufgabe mit den Vorrichtungen der unabhängigen Patentansprüche 1 und 8 gelöst.

Erfindungsgemäß umfasst die Vorrichtung eine Energiespeichermittel-Haltevorrichtung für ein Hörgerät. Sie umfasst ein Haltemodul und mindestens ein in dem Haltemodul angeordnetes Kontaktmittel zur Verbindung mit einer Energieladevorrichtung. In dem Haltemodul sind Greifmittel ausgebildet, welche die Kontaktmittel abdecken, so dass beim Einsetzen der Haltevorrichtung in ein Gehäusemodul des Hörgeräts die Kontaktmittel von außen kontaktierbar aber durch menschliche Finger nicht erreichbar sind.

Das bringt den Vorteil, dass die Kontaktmittel vor Korrosion infolge von Feuchtigkeit durch Fingerberührung geschützt und bei im Gehörgang eingesetztem Hörgerät von außen nicht sichtbar sind.

In einer Weiterbildung kann die Haltevorrichtung eine Batterielade für die Aufnahme einer wiederauflabaren Batterie sein.

Dadurch können Akkumulatoren in Hörgeräten verwendet werden.

In einer weiteren Ausführungsform kann das Haltemodul einen die Greifmittel umfassenden Deckel umfassen, wobei beim Einsetzen der Haltevorrichtung in das Gehäusemodul die nach außen gewandte Seite des Deckels - ausgenommen der Greifmittel - stufenlos in die Oberfläche des Gehäusemoduls übergeht.

Vorteilhaft daran ist die glatte Oberfläche, welche das Ablagern von Schmutz verhindert.

In einer Weiterbildung kann der Deckel nach außen gewölbt sein.

Dadurch lässt sich eine Batterieladevorrichtung einfacher anschließen.

In einer weiteren Ausführungsform können die Greifmittel wulstförmig und/oder nach oben gebogen ausgebildet und symmetrisch angeordnet sein.

Vorteilhaft daran ist, dass die Haltevorrichtung sicher und einfach gegriffen werden kann.

In einer Weiterbildung können die zwei Greifmittel so ausgebildet sein, dass unter dem einen Greifmittel ein Kontaktmittel und unter dem anderen Greifmittel zwei Kontaktmittel angeordnet sind.

Daran ist vorteilhaft, dass es bei einem Anschluss einer Batterieladevorrichtung zu keiner Verpolung kommen kann.

In einer weiteren Ausführungsform können die Kontaktmittel in die Oberfläche des Haltemoduls integriert sein.

Dadurch sitzen die Kontaktmittel fest im Haltemodul und können plan mit der Oberfläche des Haltemoduls abschließen.

Es wird auch ein Gehäusemodul zur Aufnahme einer erfindungsgemäßen Haltevorrichtung angegeben, bei der das Gehäusemodul unterhalb der Griffmittel und mindestens im Bereich der Kontaktmittel Aussparungen aufweist.

Dies bringt den Vorteil mit sich, dass die Kontaktmittel von außen mit Kontaktvorrichtungen erreichbar sind, aber von den Fingern eines Bedieners oder Hörgerätsträgers nicht berührt werden können

In einer Weiterbildung kann das Gehäusemodul eine Stirnplatte mit zwei Aussparungen aufweisen, wobei die Aussparungen sich bis zum Rand der Stirnplatte fortsetzen.

Dadurch können die Kontaktelemente verlässlich kontaktiert werden.

Es wird auch ein Hörgerät mit einer erfindungsgemäßen Haltevorrichtung und mit einem erfindungsgemäßen Gehäusemodul angegeben.

Weitere Besonderheiten der Erfindung werden aus den nachfolgenden Erläuterungen eines Ausführungsbeispiels anhand von schematischen Zeichnungen ersichtlich.

Es zeigen:
- Figur 1:: eine Stirnplatte mit einer Energiespeichermittel- Haltevorrichtung,
- Figur 2:: eine Detailansicht einer Stirnplatte mit einer Energiespeichermittel-Haltevorrichtung,
- Figur 3:: eine Schnittbildansicht einer Stirnplatte mit einer Energiespeichermittel-Haltevorrichtung,
- Figur 4:: eine weitere Detailansicht einer Stirnplatte mit einer Energiespeichermittel-Haltevorrichtung und
- Figur 5:: eine weitere Schnittbildansicht einer Stirnplatte mit einer Energiespeichermittel-Haltevorrichtung.

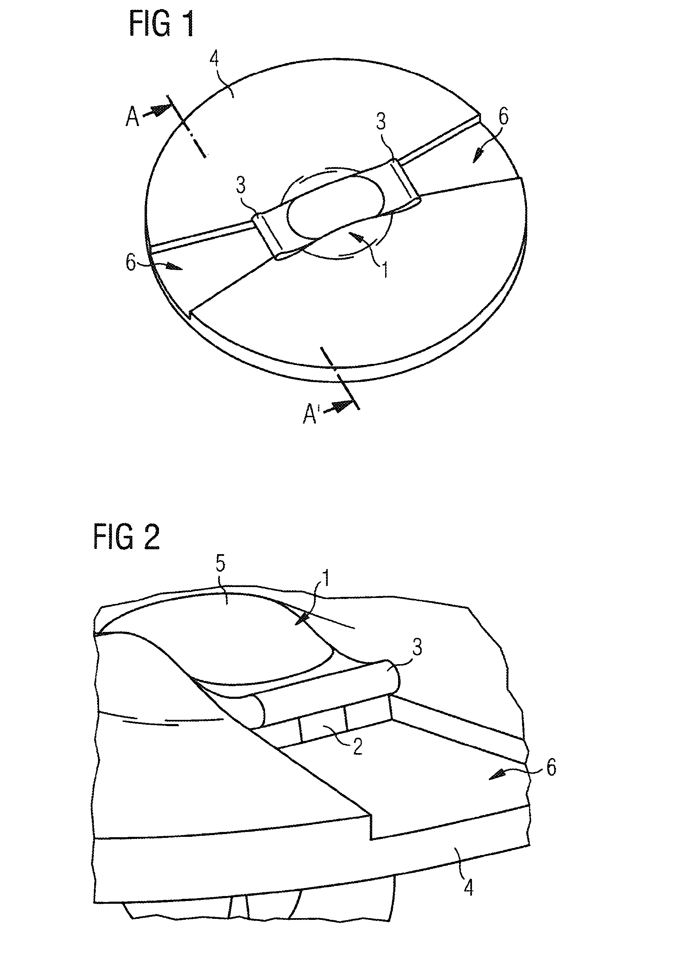

Figur 1 zeigt eine perspektivische Ansicht einer Stirnplatte 4 als Gehäusemodul eines sonst nicht dargestellten In-dem-Ohr Hörgeräts. In der Stirnplatte 4 befindet sich eine Öffnung, in der ein Haltemodul 1 mit zwei wulstförmigen Griffen 3 als Greifmittel eingeführt ist. Die Stirnplatte 4 und das Haltemodul 1 bilden in eingeführter Position eine Einheit, wobei die Oberflächen nahezu nahtlos, ohne Stufe und Spalt, ineinander übergehen. Der zentrale, von außen sichtbare Bereich des Haltemoduls 1 und der zentrale Bereich der Stirnplatte 4 sind aus ästhetischen Gründen und aus Gründen der einfacheren Einführbarkeit in eine Ladevorrichtung nach außen bombiert bzw. pilzkappenförmig ausgeführt. Zu erkennen sind symmetrisch angeordnete Aussparungen 6 in der Stirnplatte 4. Unter den Griffen 3 sind - von oben nicht sichtbar - Kontaktmittel 2 angeordnet.

In Figur 2 ist eine perspektivische Detailansicht einer Stirnplatte 4 mit einem in dieser eingeführten Haltemodul 1 aus Figur 1 zu sehen. Der obere Teil des Haltemoduls 1 bildet einen Deckel 5, in welchem symmetrisch zwei Griffe 3 ausgebildet sind. In der Seitenwand des Haltemoduls 1 ist ein Kontaktmittel 2 sichtbar, welches in die Oberfläche des Haltemoduls 1 eingelassen ist. Das Kontaktmittel 2 ist symmetrisch zu der Begrenzung des Haltemoduls 1 angeordnet. Es kann aber jede beliebige Position annehmen, solange es von außen über Kontakte kontaktierbar ist. Um das Kontaktmittel 2 überhaupt erreichen zu können, ist eine Aussparung 6 in der Stirnplatte 4 ausgebildet. Die Aussparung 6, eine Vertiefung in der Stirnplatte 4, schließt innen mit der Öffnung für das Haltemodul 1 ab und hat eine Breite entsprechend der Breite des Griffes 3 bzw. entsprechend der Breite des Haltemoduls 1. Die Aussparung 6 hat eine Dicke, welche abhängig ist von der Größe des Griffes 3 sowie von einem sicheren Anfassen der Griffe 3 durch einen Hörgeräteträger oder Hörgeräteakustiker. Die Aussparung 6 ist idealer Weise so dick, dass die Finger von Benutzern das Kontaktmittel 2 nicht erreichen können. Aus vornehmlich ästhetischen Gründen verbreitert sich die Aussparung 6 in Richtung Rand der Stirnplatte 4.

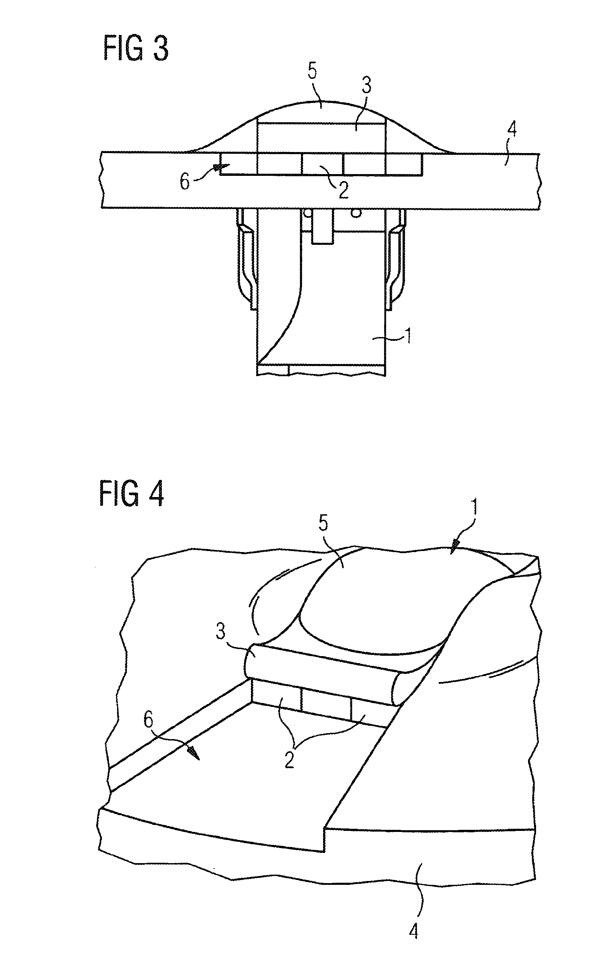

Figur 3 zeigt eine Schnittansicht der Stirnplatte 4 aus Figur 1 entlang der Verbindung A A'. Deutlich erkennbar ist das Kontaktmittel 2 des Haltemoduls 1. Das Kontaktmittel 2 wird durch den Griff 3 des Deckels 5 des Haltemoduls 1 von Berührungen durch menschliche Finger geschützt. Die Stirnplatte 4 mit ihrer Aussparung 6 gibt gerade so viel Fläche des Kontaktmittels 2 frei, dass beispielsweise eine Batterieladevorrichtung verlässlich anschließbar ist.

Figur 4 zeigt ähnlich Figur 2 eine Detailansicht einer Stirnplatte 4 mit eingeführtem Gehäusemodul 1. Im Unterschied zu Figur 2 sind aber in Figur 4 zwei Kontaktmittel 2 im Haltemodul 1 integriert. Über die Kontaktmittel 2 kann eine Batterie im Haltemodul 1 nachgeladen und/oder die Batteriespannung gemessen werden. Durch eine andere Lage der Kontaktmittel 2 gegenüber Figur 2 kann ein Verpolen beim Nachladen verhindert werden. Der Deckel 5 des Haltemoduls 1 ist wiederum nach außen gewölbt und geht stufenlos in die Stirnplatte 4 über.

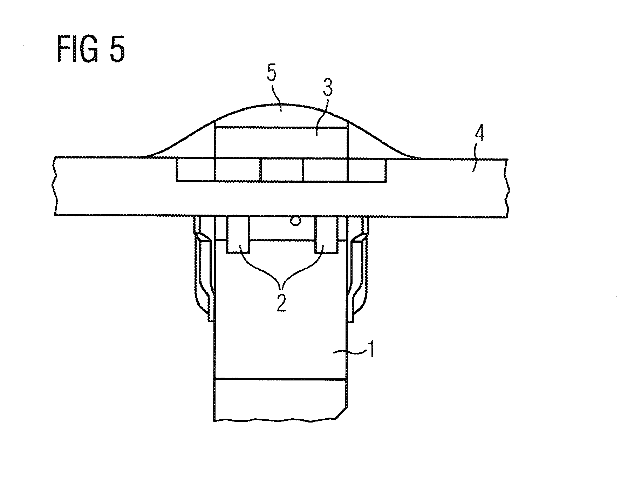

In Figur 5 ist eine Schnittansicht ähnlich Figur 3 zu sehen. Der Schnitt erfolgt durch eine Stirnplatte 4 gemäß Figur 4 derart, dass die Kontaktmittel 2 und die Griffe 3 gut zu erkennen sind. Im Unterschied zu Figur 3 sind in Figur 5 zwei Kontaktelemente 2 unterhalb der Griffe 3 des Deckels 5 im Haltemodul 1 integriert.

Anstelle einer Batterie kann in weiteren Ausführungsformen ein anderes Energiespeichermittel, beispielsweise eine Brennstoffzelle, verwendet werden.

### Bezugszeichenliste

- 1: Haltemodul
- 2: Kontaktmittel
- 3: Greifmittel (Griff)
- 4: Gehäusemodul (Stirnplatte)
- 5: Deckel des Haltemoduls
- 6: Aussparung im Gehäusemodul

## Patentansprüche

1. Energiespeichermittel-Haltevorrichtung für ein Hörgerät, umfassend ein Haltemodul (1) und mindestens ein in dem Haltemodul (1) angeordnetes Kontaktmittel (2) zur Verbindung mit einer Energieladevorrichtung,
**dadurch gekennzeichnet,**
**dass** in dem Haltemodul (1) Greifmittel (3) ausgebildet sind und die Kontaktmittel (2) derart abdecken, dass beim Einsetzen der Haltevorrichtung in ein Gehäusemodul (4) des Hörgeräts die Kontaktmittel (2) von außen kontaktierbar aber durch menschliche Finger nicht erreichbar sind.

2. Haltevorrichtung nach Anspruch 1,
**dadurch gekennzeichnet,**
**dass** die Haltevorrichtung eine Batterielade für die Aufnahme einer wiederaufladbaren Batterie ist.

3. Haltevorrichtung nach Anspruch 1 oder 2,
**dadurch gekennzeichnet,**
**dass** das Haltemodul (1) einen die Greifmittel (3) umfassenden Deckel (5) umfasst, wobei beim Einsetzen der Haltevorrichtung in das Gehäusemodul (4) die nach außen gewandte Seite des Deckels (5) ausgenommen der Greifmittel (3) stufenlos in die Oberfläche des Gehäusemoduls (4) übergeht.

4. Haltevorrichtung nach Anspruch 3,
**dadurch gekennzeichnet,**
**dass** der Deckel (5) nach außen gewölbt ist.

5. Haltevorrichtung nach einem der vorigen Ansprüche,
**dadurch gekennzeichnet,**
**dass** die Greifmittel (3) wulstförmig und/oder nach oben gebogen ausgebildet und symmetrisch angeordnet sind.

6. Haltevorrichtung nach einem der vorigen Ansprüche,
**dadurch gekennzeichnet,**
**dass** zwei Greifmittel (3) ausgebildet sind, wobei unter dem einen Greifmittel (3) ein Kontaktmittel (2) und unter dem anderen Greifmittel (3) zwei Kontaktmittel (2) angeordnet sind.

7. Haltevorrichtung nach einem der vorigen Ansprüche, **dadurch gekennzeichnet,**
**dass** die Kontaktmittel (2) in die Oberfläche des Haltemoduls (1) integriert sind.

8. Gehäusemodul (4) zur Aufnahme einer Haltevorrichtung nach einem der Ansprüche 1 bis 7,
**dadurch gekennzeichnet,**
**dass** das Gehäusemodul (4) unterhalb der Greifmittel (3) und mindestens im Bereich der Kontaktmittel (2) Aussparungen (6) aufweist.

9. Gehäusemodul (4) nach Anspruch 8,
**dadurch gekennzeichnet,**
**dass** das Gehäusemodul eine Stirnplatte (4) mit zwei Aussparungen (6) ist, wobei die Aussparungen (6) sich bis zum Rand der Stirnplatte (4) fortsetzen.

10. Hörgerät mit einer Haltevorrichtung nach einem der Ansprüche 1 bis 7 und einem Gehäusemodul (4) nach einem der Ansprüche 8 oder 9.

## Claims

1. Energy storage means holding device for a hearing device, including a holding module (1) and at least one contact means (2) arranged in the holding module (1) for connection to an energy charging device,
**characterised in that**,
gripping means (3) are embodied in the holding module (1) and cover the contact means (2) such that when inserting the holding device into a housing module (4) of the hearing device, the contact means (2) can be contacted from the outside but cannot however be reached by human fingers.

2. Holding device according to claim 1,
**characterised in that**
the holding device is a battery charger for receiving a rechargeable battery.

3. Holding device according to claim 1 or 2,
**characterised in that**
the holding module (1) includes a cover (5) including the gripping means (3), with the side of the cover (5) which faces outwards, excluding the gripping means (3), passing continuously into the surface of the housing module (4) when inserting the holding device into the housing module (4).

4. Holding device according to claim 3,
**characterised in that**
the cover (5) is arched outwards.

5. Holding device according to one of the preceding claims, **characterised in that**
the gripping means (3) are toric and/or embodied so as to be arched upwards and arranged symmetrically.

6. Holding device according to one of the preceding claims, **characterised in that**
two gripping elements (3) are embodied, with a contact means (2) being arranged below the one gripping element (3) and two contact means (2) being arranged below the other gripping element (3).

7. Holding device according to one of the preceding claims, **characterised in that**
the contact means (2) are integrated in the surface of the holding module (1).

8. Housing module (4) for receiving a holding device according to one of claims 1 to 7,
**characterised in that**
the housing module (4) has recesses (6) below the gripping element (3) and at least in the region of the contact means (2).

9. Housing module (4) according to claim 8,
**characterised in that**
the housing module is a front plate (4) with two recesses (6), with the recesses (6) continuing up to the edge of the front plate (4).

10. Hearing device with a holding device according to one of claims 1 to 7 and a housing module (4) according to one of claims 8 or 9.

## Revendications

1. Dispositif de support de moyens de stockage d'énergie pour appareil auditif, comprenant un module de support (1) et au moins un moyen de contact (2) disposé dans le module de support (1) et destiné à être relié à un dispositif chargeur d'énergie,
**caractérisé en ce que**
des moyens de préhension (3) sont formés dans le module de support (1) et recouvrent les moyens de contact (2) de telle manière que lors de la mise en place du dispositif de support dans un module de boîtier (4) de l'appareil auditif, les moyens de contact (2) peuvent être mis en contact de l'extérieur mais ne peuvent être atteints par des doigts humains.

2. Dispositif de support selon la revendication 1, **caractérisé en ce que**
le dispositif de support est un chargeur de batterie prévu pour recevoir une batterie rechargeable.

3. Dispositif de support selon la revendication 1 ou 2, **caractérisé en ce que**
le module de support (1) comprend un couvercle (5) comprenant les moyens de préhension (3), le côté du couvercle (5) dirigé vers l'extérieur, à l'exception des moyens de préhension (3), se fondant progressivement dans la surface du module de boîtier (4) lors de la mise en place du dispositif de support dans le module de boîtier (4).

4. Dispositif de support selon la revendication 3, **caractérisé en ce que**
le couvercle (5) est bombé vers l'extérieur.

5. Dispositif de support selon l'une des revendications précédentes,
**caractérisé en ce que**
les moyens de préhension (3) sont configurés en forme de bourrelet et/ou sont courbés vers le haut et sont disposés symétriquement.

6. Dispositif de support selon l'une des revendications précédentes,
**caractérisé en ce que**
deux moyens de préhension (3) sont formés, sous ledit un moyen de préhension (3) étant disposé un moyen de contact (2) et sous ledit autre moyen de préhension (3) étant disposés deux moyens de contact (2).

7. Dispositif de support selon l'une des revendications précédentes,
**caractérisé en ce que**
les moyens de contact (2) sont intégrés dans la surface du module de support (1).

8. Module de boîtier (4) destiné à recevoir un dispositif de support selon l'une des revendications 1 à 7,
**caractérisé en ce que**
le module de boîtier (4) présente des évidements (6) au-dessous des moyens de préhension (3) et au moins au niveau des moyens de contact (2).

9. Module de boîtier (4) selon la revendication 8, **caractérisé en ce que**
le module de boîtier est une plaque frontale (4) pourvue de deux évidements (6), lesdits évidements (6) se poursuivant jusqu'au bord de la plaque frontale (4).

10. Appareil auditif pourvu d'un dispositif de support selon l'une des revendications 1 à 7 et d'un module de boîtier (4) selon l'une des revendications 8 et 9.
